# EUROPÄISCHE PATENTSCHRIFT

(11) **EP 1 793 180 B1**
(45) Veröffentlichungstag und Bekanntmachung des Hinweises auf die Patenterteilung: **20.02.2008**
(21) Anmeldenummer: 06124552.8
(22) Anmeldetag: 22.11.2006
(51) Int. Cl.: F24F 13/15, B60H 1/34

(54) **Belüftungsdüse mit Horizontal- und/oder Vertikallamellen**
Ventilation nozzle with horizontal and/or vertical fins
Buse d'aération dotée de lamelles horizontales et/ou verticales

(30) Priorität: 30.11.2005 DE 202005018642 U
(43) Veröffentlichungstag der Anmeldung: 06.06.2007
(73) Patentinhaber: Dr. Schneider Kunststoffwerke GmbH, 96317 Kronach (DE)
(72) Erfinder: Uhlenbusch, Olaf, 96275 Marktzeuln (DE)
(74) Vertreter: Pröll, Jürgen

(56) Entgegenhaltungen:
- EP-A1- 1 422 088
- DE-A1- 10 225 811
- JP-A- 60 244 619

## Beschreibung

Die Erfindung betrifft eine Belüftungsdüse mit Horizontal- und/oder Vertikallamellen, die in einer Luftaustrittsöffnung eines Düsengehäuses mit angeschlossenem Luftzufuhrschacht im Neigungswinkel verstellbar angeordnet sind.

Luftdüsen der gattungsgemäßen Art sind beispielsweise aus der WO 02/100669 A1 mit Horizontallamellen und aus der DE 198 50 989 C1 mit Horizontal- und Vertikallamellen bekannt. In der zuletzt genannten Schrift ist eine Frischluftdüseneinrichtung für ein Fahrzeug beschrieben, die ein schachtartiges Düsengehäuse mit Vertikallamellen und mit Horizontallamellen aufweist. Um für die Frischluftdüseneinrichtung auf der linken Seite eines Armaturenbrettes und auf der rechten Seite eines Armaturenbrettes sowie für die Kombination zweier Frischluftdüseneinrichtungen im Mittelbereich des Armaturenbrettes des Fahrzeuges nur gleich ausgebildete Düsengehäuse zur Verfügung stellen zu müssen, weist das Düsengehäuse an seinen beiden gegenüberliegenden Seitenwänden jeweils einen Lagerzapfen für ein Einstellrad auf, mit welchem die horizontalen Lamellen verstellbar sind. Mit Hilfe eines Kopplungselementes sind die einander zugewandten, benachbarten Lagerzapfen zweier Düsengehäuse miteinander zu einer Kombination zweier Düseneinrichtungen verbindbar, wie sie im Mittenbereich des Armaturenbrettes eines Fahrzeuges zum Einsatz gelangen. Die Horizontallamellen können dabei mittels eines seitlichen Stellrades, die vertikalen Lamellen mittels eines untenseitig im Rahmen eingebrachten Stellrades verstellt werden.

Bei den angegebenen Lamellen der bekannten Art befindet sich die Drehachse im Wesentlichen in der Mitte der Stirnseiten. Sie sind entweder etwas tiefer in den Rahmen des Gehäuses hineinverlegt oder schließen mit dem Gehäuserahmen ab, so dass beim gleichzeitigen Verschwenken aller miteinander über ein Kopplungsmittel verbundenen Lamellen diese aus der Ebene gleichförmig herausgeschwenkt werden und je nach Einstellung einen bestimmten Winkel zur Oberfläche des Rahmens einnehmen. Die Kopplungselemente sind dabei in der Regel im Gehäuse sichtbar. Bei anderen Ausführungen sind an den Stirnseiten der Lamellen neben dem Lagerzapfen auch Mitnahmezapfen angebracht, die in Kurvenbahnen geführt sind und aus der Seitenwand des Gehäuses hervorstehen. Auf die Zapfenenden ist eine Mitnahmescheibe aufgesteckt, die als Koppelmittel dient und in Wirkverbindung mit einem Stellrad steht, bei dessen Bewegung die Mitnahmescheibe die Lamellen innerhalb der durch die Kurvenbahnen gegebenen Zwangsführung bewegt.

Aus EP 1 422 088, das als nächstliegender Stand der Technik gesehen wird, ist eine Luftdüse mit Horizontal- und/oder Vertikallamellen, die in einer Luftaustrittsöffnung eines Düsengehäuses mit angeschlossenem Luftführungsschacht im Neigungswinkel verstellbar angeordnet sind, wobei alle Lamellen zusammen durch Seitenwände verbunden sind, offenbart.

Ausgehend von dem bekannten Stand der Technik liegt der Erfindung die Aufgabe zugrunde, eine effizientere Düsenverstellung zu ermöglichen und eine Gestaltung anzugeben, die die Kopplungsmittel verdeckt. Die Lehre der Erfindung soll dabei sowohl für Horizontal- als auch für Vertikallamellenanordnungen einsetzbar sein.

Die Aufgabe wird erfindungsgemäß durch Ausbildung der Luftdüse gemäß der im Anspruch 1 angegebenen Lehre gelöst.

Vorteilhafte Weiterbildungen der Erfindung sind in den Unteransprüchen im Einzelnen angegeben.

Durch das Zusammenfassen von zwei Lamellen zu einem kastenförmigen Lamellenpaar, das seitlich über Seitenwände miteinander verbunden ist und auch über die Länge verteilt durch Verbindungsrippen miteinander zusätzlich verbunden sein kann, ist die Möglichkeit geschaffen, die Schenkachse - bezogen auf ein solches Lamellenpaar - an den Seitenwänden beliebig vorzugeben. Beim Verschwenken tritt eine Lamelle gegenüber der anderen des Lamellenpaa-res zurücktritt, wodurch ungleiche Luftströme gewünscht entstehen. Die Schwenkachse kann also im Eckenbereich, im Mittenbereich, im oberen Randbereich oder aber auch tiefer gesetzt in der Fläche der Seitenwand angeordnet sein. Je nach Anordnung ist dadurch auch ein anderes Erscheinungsbild der Lamellenpaare in den Schwenkstellungen einerseits und eine andere Luftströmwirkung andererseits gegeben. Die Seitenwände können dabei auch nach innen gewölbt ausgeführt sein, um eine Strömungsbegünstigung zu erreichen, während zwischen den benachbarten Lamellenpaaren eine normale Öffnung mit abgestufter Ablenkung des Luftstroms gegeben ist. Die Abstufung einer Lamelle eines Lamellenpaares gegenüber der nächstfolgenden Lamelle des anderen Lamellenpaares ist durch die Schwenkachsenlage vorgegeben. Selbst bei gleichförmigen Lamellen ist dieses sichergestellt, während bei Einzellamellen alle Lamellen parallel gestellt sind und keine Abstufungen zwischen den einzelnen Lamellen gegeben ist. Es ist ersichtlich, dass durch diese Ausgestaltungsform darüber hinaus der Lamellenabstand zwischen den Lamellenpaaren verkleinert und der Lamellenabstand eines Lamellenpaares vergrößert werden kann. Darüber hinaus kann durch entsprechende Tiefenabmessung der Lamellen erreicht werden, dass die unteren oder oberen in der Verschließstellung, also in der einen oder anderen Endstellung der Schwenkbewegung der Lamellen, die Luftdurchdringungsöffnung der Luftdüse nahezu verschließen.

Durch die Erfindung werden die vereinigten Vorteile einer Walzendüse, nämlich gute Luftablenkung einerseits, mit denen einer Lamellendüse, die eine filigrane Optik aufweisen, andererseits vereinigt. Durch die Anordnung wird auch eine Tiefenwirkung erzielt, die einerseits einen besseren Strömungsrichtungsverlauf ermöglicht und andererseits durch die zwischen den Lamellenpaaren gegebenen Zwischenräume eine diffuse Luftströmungsüberlagerung bewirkt. Diese verkoppeln sich vor der Luftaustrittsöffnung der Düse in gewünschter Weise. Die Lamellenpaare lassen sich genauso leicht verstellen wie Einzellamellen. Sie können auch mit Einzellamellen kombiniert werden. Die Verstellung erfolgt in bekannter Weise dadurch, dass an den Seitenwänden der Lamellenpaare oder an Verlängerungen hieran nach außen stehende Lagerzapfen als Lagermittel vorgesehen sind, auf die ein Kopplungselement aufgesteckt werden kann, das die Lagerzapfen aller Lamellenpaare miteinander koppelt. Diese Verbindungsstange kann dann verschoben werden. Das Verschieben kann beispielsweise auch über ein Stellrad oder einen Stellschieber erfolgen, der aus dem Rahmen der Luftdüse hervortritt und mit Kopplungselementen versehen ist, die mit der Betätigungsstange in Wirkverbindung stehen. Es ist aber auch möglich, entweder einen Reiter auf einer Lamelle eines Lamellenpaares vorzusehen oder ein Lamellenpaar mit Griffkante direkt für die manuelle Betätigung auszubilden, so dass beim Verschwenken derselben die anderen mitgekoppelten Lamellenpaare ebenfalls verschwenken.

Die Lamellen eines Lamellenpaares können auch über eine Seitenwand miteinander verbunden sein, die rautenförmig ausgebildet ist. Dies hängt von der Ausbildung und gewünschten Anordnung des Lamellenpaares ab. Die Verlängerung an den Seitenwänden des Lamellenpaares für die Lagerung bzw. für den feststehenden Lagerzapfen für die Kopplungsmittel braucht auch nicht überständig zu sein. Es kann der Lagerstift oder Bolzen auch aus der Ebene der Seitenwand direkt vorstehen. Dies hängt von der jeweiligen Ausgestaltung und der Tiefe der Lamellen und damit von den Lamellenpaaren ab. Die Erfindung ermöglicht es darüber hinaus, dass die Lagermittel an den Seitenwänden der Lamellenpaare durch die Seitenwände des Gehäuses, nämlich durch eingebrachte Durchbrüche, hindurch gesteckt werden können oder aber auch hinter einer vorgezogenen Lagerwand angebracht sind, so dass diese Mittel unsichtbar bleiben und den optischen Eindruck der Düsenfront nicht beeinträchtigen.

Die Lamellenpaare können direkt durch Kraftausübung auf eine der Lamellen verschwenkt werden oder indirekt über ein Stellrad oder einen Schieber, der an dem Gehäuse außenseitig oder durch eine Blende durchgreifend angeordnet ist, betätigt werden. Für die direkte Betätigung ist eine Lamelle als Grifflamelle ausgebildet, die übrigen Lamellenpaare und gegebenenfalls weitere Einzellamellen sind in bekannter Weise über Koppelmittel miteinander verbunden und verschwenken synchron. Auf einer Lamelle kann auch ein Schieber angeordnet sein, dessen Oberfläche so gestaltet ist, das er leicht für die beschriebene Funktion mit den Fingern erfasst werden kann. Dieser Schieber kann mit Kopplungsmitteln verbunden sein, die beispielsweise hinter den Horizontallamellen angeordnete Vertikallamellen zu verschwenken gestatten. Der Schieber erfüllt also zwei Funktionen. In weiterer Ausgestaltung kann vorgesehen sein, dass die Seitenwände des Gehäuses innenliegende, vorgezogene Lagerwände aufweisen zwischen denen die Lamellenpaare und gegebenenfalls weitere Einzellamellen verschwenkbar gelagert sind, so dass die Koppelelemente hinter den Lagerwänden optisch nicht in Erscheinung treten. Diese Lagerwände können von außen nach innen und nach hinten gebogen ausgeführt sein, sie können aber auch umgekehrt von hinten nach vorne, Seitennuten im Gehäuse bildend, ausgeformt sein. Diese Seitennuten können teilweise durch Ausrundungen der Seitenwände des Lamellenpaares wiederum verdeckt werden.

Das hier angegebene Prinzip kann grundsätzlich auf Horizontal- aber auch auf Vertikallamellenanordnungen angewendet werden. Ebenso können die vertikalen Lamellen im Vordergrund angebracht bzw. an Stelle von Horizontallamellen eingesetzt werden.

Die Erfindung wird nachfolgend anhand des in den Zeichnungen dargestellten Ausführungsbeispiels ergänzend erläutert.

In den Zeichnungen zeigen:
- FIG 1: ein Düsengehäuse mit schräg aufgesetztem Rahmen mit darin befindlichen Lamellenpaaren in einer nach oben gerichteten Schrägstellung,
- FIG 2: das in Figur 1 dargestellte Ausführungsbeispiel mit nahezu horizontalen Lamellenpaaren,
- FIG 3: die Anordnung gemäß Figuren 1 und 2 mit nach unten gerichteten Lamellenpaaren und
- FIG 4: in einer Explosionszeichnung die wesentlichen Teile, nämlich drei Lamellenpaare ohne Gehäuseteil.

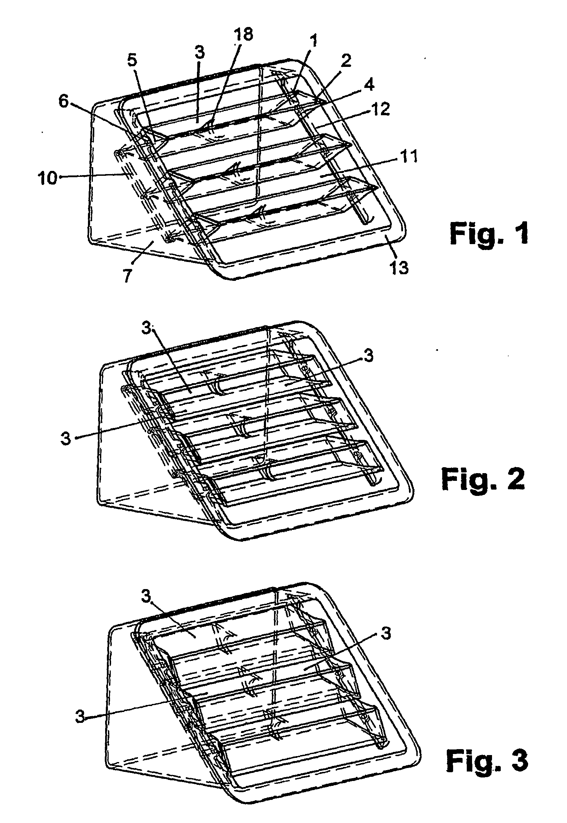

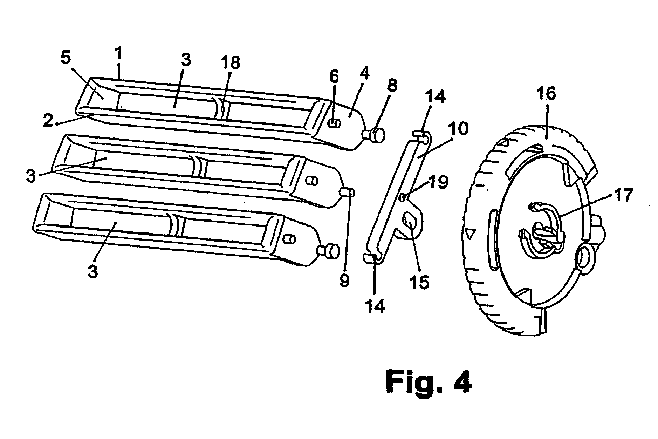

In den Figuren 1, 2 und 3 ist ein Düsengehäuse 7 einer Luftdüse dargestellt, das frontseitig eine schräg verlaufende Luftaustrittsöffnung 11 aufweist. Diese Luftaustrittsöffnung 11 wird von einem Rahmen 13 abgeschlossen, der auch Seitenwände aufweisen kann, die in das Düsengehäuse 7 hineinreichen. Entweder an diesen Seitenwänden oder an den Seitenwänden des Düsengehäuses 7 sind drei in einem bestimmten Raster zueinander angeordnete Lamellenpaare 3 vorgesehen. Diese sind um die so gebildete Schwenkachse verschwenkbar. Die Lamellenpaare 3 bestehen aus gleichförmigen oder abweichend geformten Lamellen 1, 2 die paarweise über Seitenwände 4 und 5 miteinander verbunden sind. Die Lamellen 1, 2 können darüber hinaus über Verbindungsrippen 18, die im Ausführungsbeispiel mittig angeordnet sind, ergänzend verbunden sein. Diese Verbindungsrippen 18 können so ausgebildet sein, dass sie in den Hintergrund treten, wie dies aus der Abbildung ersichtlich ist. Die Lagerstellen, nämlich Lagerbohrungen, befinden sich in den Seitenwänden 12 des Düsengehäuses 7 und nehmen die Lagerzapfen, die als Lagermittel 6 an den Seitenwänden 4, 5 vorstehend vorgesehen sind, auf. Die Lagerstellen können Lagerbohrungen oder omegaförmige Lagerschalen sein, in die die Lagermittel 6 eingedrückt werden. Die Lagermittel 6 befinden sich an beiden Seitenwänden 4, 5 auf gleicher Höhe und sind in diesem Ausführungsbeispiel mittig an den Seitenwänden 4, 5 beabstandet zur oberen Kante angeordnet. Die Seitenwände 4, 5 sind darüber hinaus, wie aus den Figuren 1, 2, 3 ebenfalls ersichtlich ist, im hinteren oberen Winkel verlängert und mit Lagerzapfen als Lagermittel 8, 9 versehen, auf die ein Koppelmittel 10 in Form einer Stange mit Lagerbohrungen 19 oder aufklippbaren Lagerschalen 14 aufgesteckt werden kann, um ein synchrones Verschwenken aller drei dargestellten Lamellenpaare 3 zu ermöglichen. Durch Druck auf eine der dargestellten Lamellenpaare 3 wird ein synchrones Verschwenken bewirkt. Die Lamellenpaare 3 können aber auch durch weitere Mittel, wie Stellräder 16, wie anhand von Figur 4 später noch erläutert wird, ebenfalls verschwenkt werden.

Figur 2 zeigt, dass die Lamellenpaare 3 in eine nahezu horizontale Position verschwenkt sind. Figur 3 zeigt eine Darstellung, bei der die Lamellenpaare 3 nach unten verschwenkt sind. Es ist ersichtlich, dass die Lamellenpaare 3 aus der Stellung in Figur 1 nach oben weiterverschwenkt werden können. Die unteren Lamellen 2 der Lamellenpaare 3 reihen sich dann aneinander und verschließen die Luftaustrittsöffnung 11 im Wesentlichen. Die mit dieser Lamellenanordnung erzielten Vorteile sind eingangs bereits beschrieben.

In Figur 4 sind in einer Explosionszeichnung drei Lamellenpaare 3 dargestellt, die jeweils aus einer oberen und einer unteren Lamelle 1 und 2 bestehen, die über Seitenwände 4 und 5 miteinander verbunden sind. Zur Verstärkung des Verbundes ist eine mittige Verbindungsrippe 18 vorgesehen, die gebogen ausgeführt und zurückgesetzt ist. An den Seitenwänden 4 und 5 sind Lagermittel 6 in Form von vorstehenden Lagerzapfen vorgesehen, die in die Lagerbohrungen in den Seitenwänden 12 des Düsengehäuses 7 bzw. in Seitenwände eines Rahmeneinsatzes 13 eingesetzt sind. Da an beiden Seiten solche Lagermittel 6 vorgesehen sind, ist eine Schwenkachse gegeben, um die ein Lamellenpaar 3 verschwenkbar ist. Die Seitenwände 5 und 6 an den Lamellenpaaren 3 überstehen die Tiefe der Lamellen 1 und 2 und sind im Wesentlichen dreieckförmig zusammengeführt. Im unteren Bereich befinden sich im Ausführungsbeispiel vorstehende Lagerzapfen als Lagermittel 8 und 9. Das Lagermittel 8 weist äußere Ringflansche auf, während das Lagermittel 9 nur als Steckzapfen ausgebildet ist. Auf das Lagermittel 9 wird die als Kopplungsmittel 10 vorgesehene Kopplungsstange mit der Lagerbohrung 19 aufgesteckt. Die Passung ist so gewählt, dass der Lagerzapfen 9 sich in der Lagerbohrung 19 drehen kann. Durch Verschwenken und Aufrasten der Lagerrastschalen 14 an dem Kopplungsmittel 10 auf das Lagermittel 8 werden auch die benachbarten Lamellenpaare mit gekoppelt. Das Kopplungsmittel 10 weist ferner eine als Langloch ausgebildete Lagerbohrung 15 auf, in die ein nicht dargestellter Mitnahmezapfen an einem Stellrad 16 eingreift, welches Stellrad 16 beispielsweise in dem Rahmen 13 in einem Spalt gelagert sein kann, der in den Figuren 1 bis 3 dargestellt ist. Zur Lagerung kann der Lagerkranz 17 in eine entsprechende Ausnehmung einer Wand eingreifen. Aus dieser Abbildung ist ebenfalls ersichtlich, dass auf einfache Weise eine neuartige Lamellenanordnung geschaffen werden kann, die strömungsbegünstigend in eine Luftdüse einsetzbar ist. Auch erleichtert dies die Montage, da praktisch nur die Hälfte der Anzahl der Lamellen montiert werden muss.

Die Erfindung ist nicht nur auf die dargestellte Ausführungsform beschränkt. Sie umfasst auch alle anderen Ausbildungen, insbesondere auch dreiteilig oder vierteilig ausgebildete Lamellenanordnungen sowie Anordnungen mit unterschiedlichen Seitenwandgestaltungen der Verbindungswände der Lamellen.

### Bezugszeichenliste

- 1: Lamelle
- 2: Lamelle
- 3: Lamellenpaar
- 4: Seitenwand
- 5: Seitenwand
- 6: Lagermittel
- 7: Düsengehäuse
- 8: Lagermittel
- 9: Lagermittel
- 10: Koppelmittel
- 11: Luftaustrittsöffnung
- 12: Seitenwände
- 13: Rahmen
- 14: Lagerrastschale
- 15: Lagerbohrung
- 16: Stellrad
- 17: Lagerkranz
- 18: Verbindungsrippe
- 19: Lagerbohrung

## Patentansprüche

1. Luftdüse mit Horizontal- und/oder Vertikallamellen, die in einer Luftaustrittsöffnung eines Düsengehäuses mit angeschlossenem Luftzufuhrschacht im Neigungswinkel verstellbar angeordnet sind, **dadurch gekennzeichnet, dass** jeweils zwei Lamellen (1, 2) ein kastenförmiges Lamellenpaar (3) bilden, das mindestens durch Seitenwände (4, 5) miteinander verbunden ist, an welchen Seitenwänden (4, 5) Lagermittel (6) zur Bildung einer Schwenkachse und zur Lagerung an den Seitenwänden (12) oder Kopf- und Bodenwänden des Düsengehäuses (7) vorgesehen sind, order an den Wänden eines Rahmens (13) mit dem Düsengehäuse (7) verbindbare Lagermittel (8, 9) für Koppelmittel (10) zum synchronen Verschwenken weiterer Lamellenpaare (3) und/oder Einzellamellen vorgesehen sind.

2. Luftdüse nach Anspruch 1, **dadurch gekennzeichnet, dass** die Lamellenpaare (3) im gleichen oder in einem kleineren Rastermaß zueinander angeordnet sind als der Abstand der benachbarten Lamellen (1, 2) des Lamellenpaares (3) und die Tiefe der Lamellen (1, 2) des Lamellenpaares (3) derart gewählt ist, dass beim Verschließen der Luftaustrittsöffnung durch planparalleles Verschwenken der Lamellenpaare (3) und/oder der Einzellamellen die Luftaustrittsöffnung (11) mindestens nahezu verschlossen ist.

3. Luftdüse nach Anspruch 1 oder 2, **dadurch gekennzeichnet, dass** die Seitenwände (4, 5) rautenförmig ausgebildet sind und die obere Lamelle (1) gegenüber der unteren (2) entsprechend der Schräge des Rahmens (13) der Luftdüse oder der Schräge der Stirnfläche des Düsengehäuses (7) bei gleichen Tiefen rückversetzt ist.

4. Luftdüse nach einem der vorhergehenden Ansprüche, **dadurch gekennzeichnet, dass** die Schwenkachse derart gegenüber der Vorderkante des Lamellenpaares (3) angeordnet ist, dass beim Verschwenken aus einer senkrechten Lage zur Vorderkante des Rahmens (13) des Düsengehäuses (7) oder der Stirnfläche des Düsengehäuses (7) in Schwenkrichtung mindestens eine Lamelle (1, 2) des Lamellenpaares (3) dominierend aus der Ebene des Rahmens (13) oder der Stirnfläche des Düsengehäuses (7) vorsteht.

5. Luftdüse nach Anspruch 4, **dadurch gekennzeichnet, dass** die Lagermittel (6) im ersten Drittel etwa in der Mitte der Seitenwände (4, 5) des Lamellenpaares (3) angeordnet sind.

6. Luftdüse nach Anspruch 1, **dadurch gekennzeichnet, dass** die Seitenwände (4, 5) Zapfen als Lagermittel (8, 9) aufweisen, die an mittigen oder seitlichen Verlängerungen der Seitenwände (4, 5) außenseitig vorstehend vorgesehen sind und dass an diesen eine Verbindungsstange als Koppelmittel (10) für die synchrone Verschwenkung aller Lamellenpaare (3) verschwenkbar gelagert ist.

7. Luftdüse nach Anspruch 6, **dadurch gekennzeichnet, dass** die Verlängerungen abgewinkelt oder abgekröpft sind und eine Lagerwand, die an der Seitenwand des Düsengehäuses nach innen vorstehend befestigt ist, mindestens mit den Lagermitteln (8, 9) für die Koppelmittel (10) hintergreifen, wobei an den Lagerwänden Lagerstellen für die Lagermittel (6) zum Verschwenken der Lamellenpaare (3) angebracht sind.

8. Luftdüse nach Anspruch 6, **dadurch gekennzeichnet, dass** in der Seitenwand des Düsengehäuses (7), in der Tiefe unterhalb der Lagerstellen für die Lagermittel (6), Einzeldurchbrüche oder ein Gesamtdurchbruch vorgesehen sind und dass durch diesen Durchbruch die Lagermittel (8, 9) für das Koppelmittel (10) durchgreifen oder Verlängerungen an den Seitenwänden des Lamellenpaares (3) mit den Koppelmitteln (10) vorgesehen sind und dass außenseitig die Koppelmittel zum synchronen Verschwenken angebracht sind.

9. Luftdüse nach Anspruch 1 oder 6, **dadurch gekennzeichnet, dass** das Koppelmittel (10) mit einem Stellrad (16) oder einem Stellschieber verbunden ist, durch dessen Bewegung das Koppelmittel (10) aus einer ersten Endstellung in eine zweite Endstellung und in verschiedene Zwischenstellungen verbringbar ist, in denen die Lamellenpaare (3) und die Einzellamellen in bestimmten Schrägstellungen, bezogen auf die Oberfläche des Rahmens, verbringbar sind und dass mit Betätigung des Stellrades (16) oder des Stellschiebers die Verschwenkung erfolgt.

10. Luftdüse nach Anspruch 1, **dadurch gekennzeichnet, dass** mindestens eine der Lamellen (1, 2) eines Lamellenpaares (3) als Grifflamelle ausgebildet ist und durch direkte Kraftausübung mittels Finger hierauf, verschwenkbar ist.

11. Luftdüse nach Anspruch 1 oder 10, **dadurch gekennzeichnet, dass** ein verschiebbarer Reiter auf einer Lamelle (1, 2) aufgebracht ist, mit dem das Lamellenpaar (3) verstellbar ist und durch Verschieben mitgekoppelte Vertikallamellen verschwenkbar sind.

12. Luftdüse nach Anspruch 1, **dadurch gekennzeichnet, dass** die Austrittsfläche mindestens einer der beiden Lamellen (1, 2) eines Lamellenpaares vorderseitig, nach außen weisend, ausgerundet ist.

13. Luftdüse nach Anspruch 1, **dadurch gekennzeichnet, dass** die untere Lamelle (2) mindestens des unteren Lamellenpaares (3) kürzer ist als die obere Lamelle (1).

14. Luftdüse nach Anspruch 1, **dadurch gekennzeichnet, dass** das Lagermittel (6) durch die Tubusartige Ausbildung der Seitenwand (4) optisch kaschiert ist.

15. Luftdüse nach Anspruch 14, **dadurch gekennzeichnet, dass** das Koppelmittel (10) hinter den Seitenwänden (12) verdeckt angeordnet ist, wobei die Seitenwände (12) in das Düsengehäuse (7) hineinreichen.

## Claims

1. Air nozzle with horizontal and/or vertical slats which are arranged to be adjustable in angle of inclination in an air outlet opening of a nozzle housing with a connected air feed shaft, **characterised in that** two respective slats (1, 2) form a box-shaped slat pair (3) connected together at least by side walls (4, 5), at which side walls (4, 5) bearing means (6) for formation of a pivot axis and for mounting at the side walls (12) or head and base walls of the nozzle housing (7) are provided, or are provided at the walls of a frame (13) with bearing means (8, 9), which are connectible with the nozzle housing (7), for coupling means (10) for synchronous pivotation of further slat pairs (3) and/or individual slats.

2. Air nozzle according to claim 1, **characterised in that** the slat pairs (3) are arranged relative to one another at a pitch the same as or smaller than the spacing of the adjacent slats (1, 2) of the slat pair (3) and the depth of the slats (1, 2) of the slat pair (3) is selected in such a manner that on closing of the air outlet opening by plane-parallel pivotation of the slat pairs (3) and/or of the individual slats the air outlet opening (11) is at least almost closed.

3. Air nozzle according to claim 1 or 2, **characterised in that** the side walls (4, 5) are of lozenge-shaped construction and the upper slat (1) is set back relative to the lower slat (2) at the same depth in correspondence with the inclination of the frame (13) of the air nozzle or the inclination of the end face of the nozzle housing (7).

4. Air nozzle according to one of the preceding claims, **characterised in that** the pivot axis is arranged relative to the front edge of the slat pair (3) in such a manner that on pivotation from a vertical position towards the front edge of the frame (13) of the nozzle housing (7) or the end face of the nozzle housing (7) in pivot direction at least one slat (1, 2) of the slat pair (3) protrudes in dominant manner from the plane of the frame (13) or the end surface of the nozzle housing (7).

5. Air nozzle according to claim 4, **characterised in that** the bearing means (6) are arranged in the first third approximately in the centre of the side walls (4, 5) of the slat pair (3).

6. Air nozzle according to claim 1, **characterised in that** the side walls (4, 5) comprise pins as bearing means (8, 9), which are provided to be protruding at the outer side at central or lateral prolongations of the side walls (4, 5) and that pivotably mounted at these is a connecting rod as coupling means (10) for the synchronous pivotation of all slat pairs (3).

7. Air nozzle according to claim 6, **characterised in that** the prolongations are bent over or cranked and engage behind a mounting wall, which is fastened to the side wall of the nozzle housing to be protruding inwardly, by at least the bearing means (8, 9) for the coupling means (10), wherein bearing points for the bearing means (6) for pivotation of the slat pair (3) are mounted at the mounting walls.

8. Air nozzle according to claim 6, **characterised in that** individual passages or a common passage is or are provided in the side wall of the nozzle housing (7) at a level below the bearing points for the bearing means (6) and that the bearing means (8, 9) for the coupling means (10) engage through this passage, or prolongations at the side walls of the slat pair (3) are provided with the coupling means (10) and that the coupling means for synchronous pivotation are mounted externally.

9. Air nozzle according to claim 1 or 6, **characterised in that** the coupling means (10) is connected with a setting wheel (16) or a setting slide, through the movement of which the coupling means (10) can be brought from a first end setting to a second end setting and to different intermediate settings, in which the slat pairs (3) and the individual slats can be brought into specific oblique settings referred to the surface of the frame and that the pivotation is carried out by actuation of the setting wheel (16) or the setting slide.

10. Air nozzle according to claim 1, **characterised in that** at least one of the slats (1, 10) of a slat pair (13) is constructed as a grip slat and is pivotable by direct exertion of force thereon by means of a finger.

11. Air nozzle according to claim 1 or 10, **characterised in that** a displaceable rider is mounted on a slat (1, 2) by which the slat pair (3) is adjustable and intercoupled vertical slats are pivotable by displacement.

12. Air nozzle according to claim 1, **characterised in that** the outlet surface of at least one of the two slats (1, 2) of a slat pair is rounded at the front side facing outwardly.

13. Air nozzle according to claim 1, **characterised in that** the lower slat (2) of at least the lower slat pair (3) is shorter than the upper slat (1).

14. Air nozzle according to claim 1, **characterised in that** the bearing means (6) is visually covered by the tubelike construction of the side wall (4).

15. Air nozzle according to claim 14, **characterised in that** the coupling means (10) is arranged to be concealed behind the side walls (12), wherein the side walls (12) extend into the nozzle housing (7).

## Revendications

1. Buse d'aération dotée de lamelles horizontales et/ou verticales qui sont disposées de manière réglable dans un angle d'inclinaison dans un orifice de sortie d'air d'un boîtier de buse avec une conduite d'amenée d'air raccordée, **caractérisée en ce que** deux lamelles (1, 2) forment respectivement une paire de lamelles (3) en forme de caisse qui est reliée au moins par des parois latérales (4, 5), des moyens d'appui (6) étant prévus sur lesdites parois latérales (4,5) pour former un axe de pivotement et pour le logement sur les parois latérales (12) ou les parois frontales et de fond du boîtier de buse (7), ou des moyens d'appui (8, 9) pouvant être reliés au boîtier de buse (7) étant prévus sur les parois d'un cadre (13), pour des moyens d'accouplement (10) servant au pivotement synchrone d'autres paires de lamelles (3) et/ou lamelles individuelles.

2. Buse d'aération selon la revendication 1, **caractérisée en ce que** les paires de lamelles (3) sont disposées l'une par rapport à l'autre dans la même dimension modulaire ou dans une dimension modulaire plus petite que la distance entre les lamelles contigües (1, 2) de la paire de lamelles (3) et la profondeur des lamelles (1, 2) de la paire de lamelles (3) est choisie de telle sorte que lors de la fermeture de l'orifice de sortie d'air par le pivotement parallélépipédique des paires de lamelles (3) et/ou des lamelles individuelles, l'orifice de sortie d'air (11) est au moins presque fermé.

3. Buse d'aération selon la revendication 1 ou 2, **caractérisée en ce que** les parois latérales (4, 5) sont conçues en forme de losange et la lamelle supérieure (1) est décalée vers l'arrière par rapport à la lamelle inférieure (2) selon l'inclinaison du cadre (13) de la buse d'aération ou selon l'inclinaison de la face frontale du boîtier de buse (7) en cas de profondeurs identiques.

4. Buse d'aération selon l'une quelconque des revendications précédentes, **caractérisée en ce que** l'axe de pivotement est disposé face à l'arête avant de la paire de lamelles (3) de telle sorte que lors du pivotement depuis une position perpendiculaire à l'arête avant du cadre (13) du boîtier de buse (7) ou à la face frontale du boîtier de buse (7) dans le sens de pivotement, au moins une lamelle (1, 2) de la paire de lamelles (3) fait saillie en dominant le plan du cadre (13) ou la face frontale du boîtier de buse (7).

5. Buse d'aération selon la revendication 4, **caractérisée en ce que** les moyens d'appui (6) sont disposés dans le premier tiers à peu près au milieu des parois latérales (4, 5) de la paire de lamelles (3).

6. Buse d'aération selon la revendication 1, **caractérisée en ce que** les parois latérales (4, 5) présentent des goupilles comme moyens d'appui (8, 9), lesquelles sont prévues faisant saillie côté extérieur sur des prolongements médians ou latéraux des parois latérales (4, 5) et **en ce que** sur celles-ci est logée de manière pivotante une barre de raccordement comme moyen d'accouplement (10) pour le pivotement synchrone de toutes les paires de lamelles (3).

7. Buse d'aération selon la revendication 6, **caractérisée en ce que** les prolongements sont coudés et une paroi d'appui qui est fixée sur la paroi latérale du boîtier de buse en faisant saillie vers l'intérieur s'engage pour les moyens d'accouplement (10) par l'arrière, au moins avec les moyens d'appui (8, 9), sur les parois d'appui étant montés pour les moyens d'appui (6) des points d'appui pour le pivotement des paires de lamelles (3).

8. Buse d'aération selon la revendication 6, **caractérisée en ce que** dans la paroi latérale du boîtier de buse (7), dans la profondeur au-dessous des points d'appui pour les moyens d'appui (6) sont prévues des fissures individuelles ou une fissure générale et **en ce qu'**au travers de cette fissure passent les moyens d'appui (8, 9) pour le moyen d'accouplement (10) ou alors des prolongements sur les parois latérales de la paire de lamelles (3) sont prévus avec les moyens d'accouplement (10) et **en ce que** côté extérieur sont montés les moyens d'accouplement pour le pivotement synchrone.

9. Buse d'aération selon la revendication 1 ou 6, **caractérisée en ce que** le moyen d'accouplement (10) est relié à une roue de réglage (16) ou à un coulisseau de réglage, de par le déplacement duquel, le moyen d'accouplement (10) peut être placé d'une première position finale à une seconde position finale et dans diverses positions intermédiaires, dans lesquelles les paires de lamelles (3) et les lamelles individuelles peuvent être placées dans certaines positions d'inclinaison, par rapport à la surface du cadre et **en ce que** le pivotement est effectué en actionnant la roue de réglage (16) ou le coulisseau de réglage.

10. Buse d'aération selon la revendication 1, **caractérisée en ce qu'**au moins l'une des lamelles (1, 2) d'une paire de lamelles (3) est réalisée comme lamelle de préhension et peut être pivotée en exerçant directement dessus une force au moyen d'un doigt.

11. Buse d'aération selon la revendication 1 ou 10, **caractérisée en ce qu'**un cavalier mobile est installé sur une lamelle (1, 2), à l'aide duquel la paire de lamelles (3) peut être réglée et des lamelles verticales couplées peuvent être pivotées par son déplacement.

12. Buse d'aération selon la revendication 1, **caractérisée en ce que** la face de sortie d'au moins l'une des deux lamelles (1, 2) d'une paire de lamelles est arrondie côté avant, vers l'extérieur.

13. Buse d'aération selon la revendication 1, **caractérisée en ce que** la lamelle inférieure (2) d'au moins la paire de lamelles inférieure est plus petite que la lamelle supérieure (1).

14. Buse d'aération selon la revendication 1, **caractérisée en ce que** le moyen d'appui (6) est contrecollé optiquement par la formation de la paroi latérale (4) comme un tube.

15. Buse d'aération selon la revendication 14, **caractérisée en ce que** le moyen d'accouplement (10) est disposé caché derrière les parois latérales (12), les parois latérales (12) pénétrant dans le boîtier de buse (7).
